# EUROPEAN PATENT APPLICATION

(11) **EP 3 506 081 A1**
(43) Date of publication of application: **03.07.2019**
(21) Application number: 17210629.6
(22) Date of filing: 27.12.2017
(51) Int. Cl.: G06F 3/16, G06F 3/01, H04S 7/00

(54) **AUDIO COPY-PASTE FUNCTION**

(71) Applicant: Nokia Technologies Oy, 02610 Espoo (FI)
(72) Inventor: MATE, Sujeet Shyamsundar, 33720 Tampere (FI); LEHTINIEMI, Arto, 33880 Lempäälä (FI); ERONEN, Antti, 33820 Tampere (FI); LEPPÄNEN, Jussi, 33580 Tampere (FI)
(74) Representative: Whiting, Gary

(57) **Abstract**

An apparatus and method are provided comprising: selecting a first three-dimensional volume in a first three-dimensional space, wherein the first volume includes first audio data; copying the first three-dimensional volume in the first three-dimensional space, including the first audio data, into a first three-dimensional volume of a second three-dimensional space; and determining or selecting a second three-dimensional volume in the second three-dimensional space. The first audio data comprises sound object data and ambient audio. The sound object data of the first audio data includes audio data from one or more first sound objects within the first three-dimensional volume of the first three-dimensional space. The ambient audio of the first audio data is at least partially prevented from being heard outside the second three-dimensional volume in the second three-dimensional space.

## Description

### Field

The specification relates to handling audio components of a virtual reality or augmented reality space.

### Background

Copying visual scenes (for example two-dimensional or three-dimension visual scenes) and pasting those scenes into another space (e.g. a virtual reality or augmented reality space) is relatively straightforward. Copying audio, especially three-dimension audio, and pasting such audio into another space can be more complicated.

### Summary

In a first aspect, this specification provides a method comprising: selecting a first three-dimensional volume in a first three-dimensional space, wherein the first volume includes first audio data; copying the first three-dimensional volume in the first three-dimensional space, including the first audio data, into a first three-dimensional volume of a second three-dimensional space; and determining or selecting a second three-dimensional volume in the second three-dimensional space, wherein: the first audio data comprises sound object data and ambient audio; the sound object data of the first audio data includes audio data from one or more first sound objects within the first three-dimensional volume in the first three-dimensional space; and the ambient audio of the first audio data is at least partially prevented from being heard outside the second three-dimensional volume in the second three-dimensional space. The ambient audio of the first audio data may comprise ambient audio for the first three-dimensional space and audio data for sound objects outside the first three-dimensional volume of the first three-dimensional space.

A second three-dimensional volume within the first three-dimensional space may be determined or selected, wherein the sound object data of the first audio data further comprises audio data from one or more sound objects outside the first three-dimensional volume and inside the second three-dimensional volume of the first three-dimensional space. The ambient audio of the first audio data may comprise ambient audio for the first three-dimensional space and audio data for sound objects outside the second three-dimensional volume of the first three-dimensional space.

A first transparency parameter may be provided defining the extent to which the ambient audio of the first audio data can be heard outside the second three-dimensional volume in the second three-dimensional space.

A second transparency parameter may be provided defining the extent to which the audio data from the one or more first sound objects of the first audio data can be heard outside the second three-dimensional volume in the second three-dimensional space.

A third transparency parameter may be provided defining the extent to which audio from outside the second three-dimensional volume in the second three-dimensional space can be heard within the first and/or second three-dimensional volume in the second three-dimensional space.

The first aspect may include selecting a third three-dimensional volume in the first three-dimensional space including one or more visual objects and copying the one or more visual objects within the third three-dimensional volume of the first three-dimensional space into the second three-dimensional space. In some embodiments, the first and third volumes of the first three-dimensional space are the same.

The first aspect may include defining a two-dimensional plane in the first three-dimensional space, the two-dimensional plane including one or more visual objects, the method further comprising copying the one or more visual objects in the two-dimensional plane of the first three-dimensional space into the second three-dimensional space.

The first three-dimensional space may be a virtual reality model. Alternatively or in addition, the second three-dimensional space may be a virtual reality model.

In some embodiments, at least some of said three-dimensional volumes are selected using user input or user gestures. In other embodiments, at least some of said three-dimensional volumes are set in some other way, for example automatically or in accordance with predefined rules.

The second three-dimensional volume of the second three-dimension space may be larger than the first volume in the three-dimensional space. Alternatively, the first and second three-dimensional volumes of the second three-dimensional space may be the same.

In a second aspect, this specification describes an apparatus configured to perform any method as described with reference to the first aspect.

In a third aspect, this specification describes computer-readable instructions which, when executed by computing apparatus, cause the computing apparatus to perform any method as described with reference to the first aspect.

In a fourth aspect, this specification describes an apparatus comprising: means for selecting a first three-dimensional volume in a first three-dimensional space, wherein the first three-dimensional volume includes first audio data; means for copying the first three-dimensional volume in the first three-dimensional space, including the first audio data, into a first three-dimensional volume of a second three-dimensional space; and means for determining or selecting a second three-dimensional volume in the second three-dimensional space, wherein: the first audio data comprises sound object data and ambient audio; the sound object data of the first audio data includes audio data from one or more first sound objects within the first three-dimensional volume of the first three-dimensional space; and the ambient audio of the first audio data is at least partially prevented from being heard outside the second three-dimensional volume in the second three-dimensional space.

The apparatus may further comprise means for determining or selecting a second three-dimensional volume within the first three-dimensional space, wherein the sound object data of the first audio data further comprises audio data from one or more sound objects outside the first three-dimensional volume and inside the second three-dimensional volume of the first three-dimensional space.

A first transparency parameter may be provided defining the extent to which the ambient audio of the first audio data can be heard outside the second three-dimensional volume in the second three-dimensional space.

A second transparency parameter may be provided defining the extent to which the audio data from the one or more first sound objects of the first audio data can be heard outside the second three-dimensional volume in the second three-dimensional space.

A third transparency parameter may be provided defining the extent to which audio from outside the second three-dimensional volume in the second three-dimensional space can be heard within the first and/or second three-dimensional volume in the second three-dimensional space.

The apparatus may further comprise means for selecting a third three-dimensional volume in the first three-dimensional space including one or more visual objects, the method further comprising copying the one or more visual objects within the third three-dimensional volume of the first three-dimensional space into the second three-dimensional space. In some embodiments, the first and third volumes of the first three-dimensional space are the same.

The apparatus may further comprise means for defining a two-dimensional plane in the first three-dimensional space, the two-dimensional plane including one or more visual objects, the method further comprising copying the one or more visual objects in the two-dimensional plane of the first three-dimensional space into the second three-dimensional space.

The first three-dimensional space may be a virtual reality model. Alternatively or in addition, the second three-dimensional space may be a virtual reality model.

In some embodiments, at least some of said three-dimensional volumes are selected using user input or user gestures.

In a fifth aspect, this specification describes an apparatus comprising at least one processor; and at least one memory including computer program code which, when executed by the at least one processor, causes the apparatus to: select a first three-dimensional volume in a first three-dimensional space, wherein the first volume includes first audio data; copy the first volume in the first three-dimensional space, including the first audio data, into a first volume of a second three-dimensional space; and determine or select a second three-dimensional volume in the second three-dimensional space, wherein: the first audio data comprises sound object data and ambient audio; the sound object data of the first audio data includes audio data from one or more first sound objects within the first volume of the first three-dimensional space; and the ambient audio of the first audio data is at least partially prevented from being heard outside the second three-dimensional volume in the second three-dimensional space.

In a sixth aspect, this specification describes a computer readable medium having computer-readable code stored thereon, the computer readable code, when executed by at least one processor causes performance of: selecting a first three-dimensional volume in a first three-dimensional space, wherein the first three-dimensional volume includes first audio data; copying the first volume in the first three-dimensional space, including the first audio data, into a first three-dimensional volume of a second three-dimensional space; and determining or selecting a second three-dimensional volume in the second three-dimensional space, wherein: the first audio data comprises sound object data and ambient audio; the sound object data of the first audio data includes audio data from one or more first sound objects within the first three-dimensional volume of the first three-dimensional space; and the ambient audio of the first audio data is at least partially prevented from being heard outside the second three-dimensional volume in the second three-dimensional space.

### Brief description of the drawings

Example embodiments will now be described, by way of non-limiting examples, with reference to the following schematic drawings, in which:
Figure 1 shows a virtual reality or augmented reality display system;
Figures 2 to 5 show highly schematic views of three-dimensional spaces in accordance with exemplary embodiments;
Figure 6 is a flow chart showing an algorithm in accordance with an exemplary embodiment;
Figure 7 shows a highly schematic view of three-dimensional spaces in accordance with an exemplary embodiment;
Figure 8 is a flow chart showing an algorithm in accordance with an exemplary embodiment;
Figures 9 and 10 show highly schematic views of three-dimensional spaces in accordance with exemplary embodiments;
Figure 11 is a flow chart showing an algorithm in accordance with an exemplary embodiment;
Figure 12 is a block diagram of components of a processing system in accordance with an exemplary embodiment; and
Figures 13a and 13b show tangible media, respectively a removable memory unit and a compact disc (CD) storing computer-readable code which when run by a computer perform operations according to embodiments.

### Detailed description

Virtual reality (VR) is a rapidly developing area of technology in which video content is provided to a virtual reality display system. A virtual reality display system may be provided with a live or stored feed from a video content source, the feed representing a virtual reality space or world for immersive output through the display system. In some embodiments, audio is provided, which may be spatial audio. A virtual space or virtual world is any computer-generated version of a space, for example a captured real world space, in which a user can be immersed through a display system such as a virtual reality headset. A virtual reality headset may be configured to provide virtual reality video and audio content to the user, e.g. through the use of a pair of video screens and headphones incorporated within the headset.

Augmented Reality (AR) refers to a real-world view that is augmented by computer-generated sensory input.

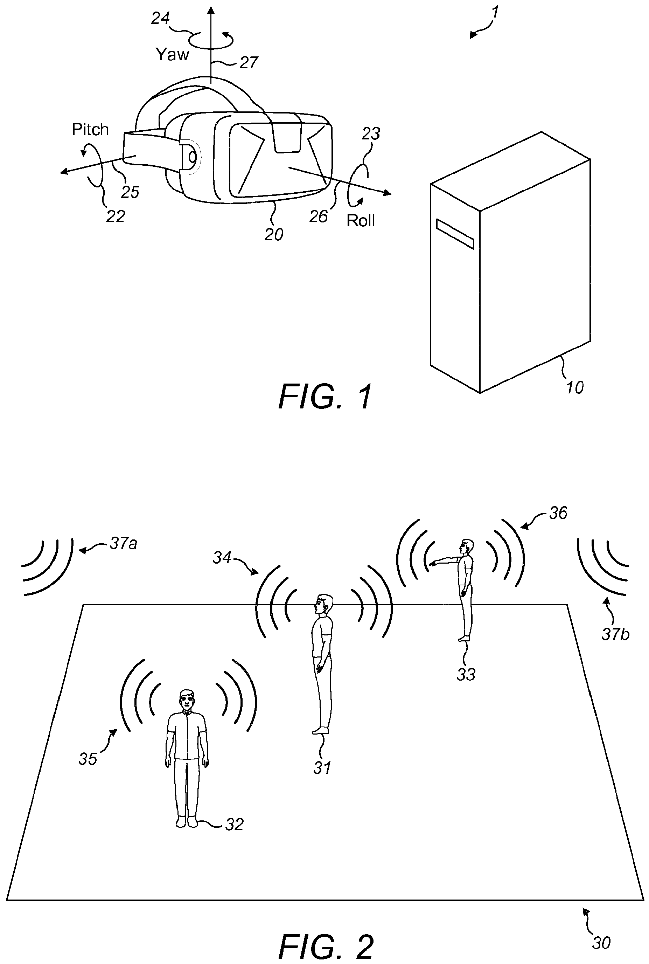

Figure 1 is a schematic illustration of a virtual reality or augmented reality display system 1 which represents user-end equipment. The system 1 includes a user device in the form of a virtual reality or augmented reality headset 20, for displaying visual data for a virtual reality or augmented reality space, and a media player 10 for rendering visual data on the headset 20. Headset 20 may comprise alternative reality (AR) glasses, which may enable visual content, for example one or more virtual objects, to be projected or displayed on top of a see-through portion of the glasses. In some example embodiments, a separate user control (not shown) may be associated with the display system 1, e.g. a hand-held controller.

The headset 20 receives the virtual reality or augmented reality content data from the media player 10. The media player 10 may be part of a separate device which is connected to the headset 20 by a wired or wireless connection. For example, the media player 10 may include a games console, or a PC configured to communicate visual data to the headset 20. Alternatively, the media player 10 may form part of the headset 20.

Here, the media player 10 may comprise a mobile phone, smartphone or tablet computer configured to play content through its display. For example, the media player 10 may be a touchscreen device having a large display over a major surface of the device, through which video content can be displayed. The media player 10 may be inserted into a holder of a headset 20. With such headsets 20, a smart phone or tablet computer may display visual data which is provided to a user's eyes via respective lenses in the headset 20. The virtual reality or augmented reality display system 1 may also include hardware configured to convert the device to operate as part of display system 1. Alternatively, the media player 10 may be integrated into the headset 20. The media player 10 may be implemented in software. In some example embodiments, a device comprising virtual reality (or augmented reality) media player software is referred to as the virtual reality (or augmented reality) media player 10.

The display system 1 may include means for determining the spatial position of the user and/or orientation of the user's head. This may be by means of determining the spatial position and/or orientation of the headset 20. Over successive time frames, a measure of movement may therefore be calculated and stored. Such means may comprise part of the media player 10. Alternatively, the means may comprise part of the headset 20. For example, the headset 20 may incorporate motion tracking sensors which may include one or more of gyroscopes, accelerometers and structured light systems. These sensors may generate position data from which a current visual field-of-view (FOV) is determined and updated as the user, and so the headset 20, changes position and/or orientation. The headset 20 may comprise two digital screens for displaying stereoscopic video images of the virtual world in front of respective eyes of the user, and also two speakers for delivering audio, if provided from the media player 10. The example embodiments herein are not limited to a particular type of headset 20.

In some example embodiments, the display system 1 may determine the spatial position and/or orientation of the user's head using a six degrees of freedom (6DoF) method. As shown in Figure 1, these include measurements of pitch 22, roll 23 and yaw 24 and also translational movement in Euclidean space along side-to-side, front-to-back and up-and-down axes 25, 26, 27.

The display system 1 may be configured to display virtual reality or augmented reality content data to the headset 20 based on spatial position and/or the orientation of the headset 20. A detected change in spatial position and/or orientation, i.e. a form of movement, may result in a corresponding change in the visual data to reflect a position or orientation transformation of the user with reference to the space into which the visual data is projected. This allows virtual reality content data to be consumed with the user experiencing a 3D virtual reality or augmented reality environment.

Audio data may also be provided to headphones provided as part of the headset 20. The audio data may represent spatial audio source content. Spatial audio may refer to directional rendering of audio in the virtual reality or augmented reality space such that a detected change in the user's spatial position or in the orientation of their head may result in a corresponding change in the spatial audio rendering to reflect a transformation with reference to the space in which the spatial audio data is rendered.

The angular extent of the environment observable through the headset 20 is called the visual field of view (FOV). The actual field of view observed by a user depends on the inter-pupillary distance and on the distance between the lenses of the headset 20 and the user's eyes, but the field of view can be considered to be approximately the same for all users of a given display device when the headset 20 is being worn by the user.

Figure 2 is a schematic view, indicated generally by the reference numeral 30, of a three-dimensional space in accordance with an example embodiment. The space 30 may be a virtual reality (or augmented reality) environment. The space 30 includes a first user 31, a second user 32 and a third user 33. The first user 31 generates audio, indicated generally by the reference numeral 34. Similarly, the second user 32 and the third user 33 generate audio, indicated generally by the reference numerals 35 and 36 respectively. In addition, ambient audio content 37a and 37b is also shown. Ambient audio content is audio content that is the same (or nearly the same) in all directions (i.e. does not have strong directional components).

The first, second and third users 31 to 33 are examples of sound objects that generate sound object data. There are, of course, many other examples of sounds objects that could be present within a space, such as the space 30. Some non-limiting examples include machinery, musical instructions and animals.

The space 30 can, for example, range from small scale environments such as a room, up to large scale environments such as an office, a train station, a complete city or even larger environments.

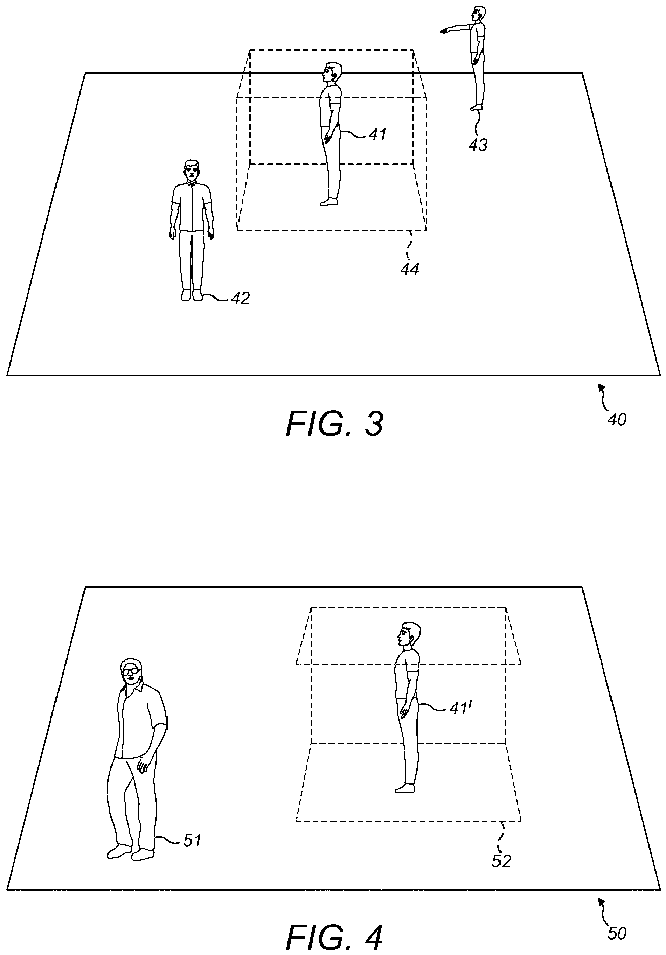

Figure 3 is a schematic view of a three-dimensional space (such as a virtual reality or augmented reality environment), indicated generally by the reference numeral 40. The space 40 includes a first user 41, a second user 42 and a third user 43, similar to the first, second and third users 31 to 33 described above. The first user 41 generates audio, such that the first user is a sound object generating sound object data. The space 40 may include other sound objects (such as the second user 42 and/or the third user 43) and may include ambient audio.

Assume that it is desired to copy a part of the space 40 into another three-dimensional space. As shown in Figure 3, a first three-dimensional volume 44 within the larger three-dimensional space 40 is selected. The first three-dimensional volume may be selected using user input (such as using a mouse/keyboard) or user gestures (such as hand gestures e.g. when using a head-mounted device). Other methods for selecting such a volume could also be used. Indeed, an automated method for determining and selecting a volume for copying could be provided.

In common with the other three dimensional volumes described herein, the first three-dimensional volume 44 may be of any size and shape (up to and including the size and shape of the three-dimensional space 40). For example, the volume 44 may be the size or a room or the size of a person. Although the volume 44 shown in Figure 3 has a cuboid shape, this is not essential; any three-dimensional shape would be possible.

Figure 4 is a schematic view of a second three-dimensional space (such as a virtual reality or augmented reality environment), indicated generally by the reference numeral 50. The volume includes a fourth user 51. The fourth user 51 may generate audio, such that the fourth user is a sound object generating sound data. As described below, the selected volume 44 described above is copied into the three-dimensional space 50.

Figure 4 shows a volume 52 that is a copied version of the first three-dimensional volume 44 selected from the first three-dimensional space 40 described above with reference to Figure 3. Thus, the first three-dimensional volume 44 of the first three-dimensional space 40 is copied to generate a first three-dimensional volume 52 of the second three-dimensional space 50.

The first three-dimensional volume 44 includes a number of parameters and attributes (such as how audio and/or visual objects inside and outside the relevant three-dimensional volume are handled, in particular to what extent the audio and/or visual data cross the boundary of a volume, as discussed further below).

Visual objects may exist within the volume 44. In one embodiment, the virtual objects within the first volume 44 of the first three-dimensional volume are copied into the first volume 52 of the second three-dimensional volume.

The first three-dimensional volume 44 may also include sound objects generating sound object data, such as the first user 41. As shown in Figure 4, the first user is copied into the second three-dimensional space as a first user 41' of the second three-dimensional space.

Copying audio from the first three-dimensional space 40 into the second three-dimensional space 50 is not trivial. For example, a sound object may be heard in the volume 44 even though it is not positioned inside that volume. Furthermore, sound objects inside the volume 44 in the first three-dimensional space may be heard outside the pasted volume 52 in the second three-dimensional space. Reproducing sound objects that are outside the volume 44 (but are heard inside that volume) such that those sound objects that can be heard outside the pasted volume 52 may result in unwanted audio being provided in the second three-dimensional space 50. For example, audio of child crying (captured in the space 40) may appear to be originating in a visible location within the space 50 that does not contain a child. This may be confusing to a user within the space 50.

In addition, both the volume 44 that is copied from and the volume 52 it is pasted to may contain ambient audio that is heard in all positions inside the volumes. If such ambient audio is summed, then the audio within the second three-dimensional space can become unmanageable, particularly if multiple volumes are copied and pasted into the second three-dimensional space (such that that ambient audio from multiple volumes may all be heard at that same time).

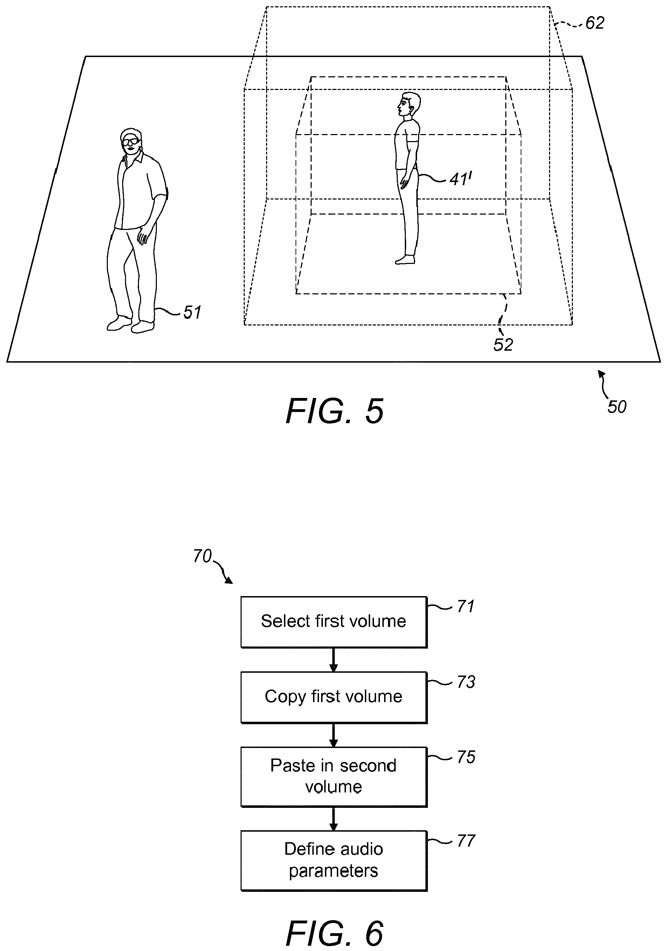

Figure 5 is a schematic view of the three-dimensional space 50. The space 50 shown in Figure 5 includes the first user 41', the fourth user 51 and the first volume 52 described above with reference to Figure 4. The space 50 shown in Figure 5 also includes a second volume 62 that is larger than, and includes, the first volume 52. The second volume 62 may be user-defined (for example, selecting using one or more user gestures). Alternatively, the second volume 62 may be automatically generated (for example, relative to the dimensions of the first volume 52 in the second three-dimensional space 50). As described in detail below, parameters of the first and second volumes 52 and 62 can be used to define how audio data is handled in the second three-dimensional space in response to the inclusion of audio data within the first volume 52.

As described above, the first three-dimensional space 40 includes ambient audio, which is heard in all positions within the space (including within the volume 44). That ambient audio is therefore included within the first volume 52 copied into the second three-dimensional volume 52. In one arrangement, the ambient audio copied into the first volume 52 is only heard within that volume (so that the ambient audio of the first audio data is not heard outside the first volume 52). In another arrangement, the ambient audio copied into the first volume is also heard within the second volume 62 (so that the ambient audio of the first audio data is not heard outside the second volume 62 of the second three-dimensional space).

As noted above, either the first volume 52 or the second volume 62 within the second three-dimensional space may prevent first ambient audio from passing into the rest of the second three-dimensional space. This blocking of ambient audio may not be total. For example, in some embodiments, the first volume or the second volume may include a transparency parameter defining the extent to which the ambient audio of the first audio data can be heard outside the first or second volume in the second three-dimensional space respectively.

Alternatively, or in addition, to controlling the leakage of ambient audio copied from the first three-dimensional space into the second three-dimensional space, in some embodiments, a transparency parameter may be provided defining the extent to which the data from the one or more first sound objects of the first audio data can be heard outside the second volume 62 (or, optionally, the first volume 52) in the second three-dimensional space 50.

Alternatively, or in addition, to controlling the leakage of audio data copied from the first three-dimensional space into the second three-dimensional space, in some embodiments, a transparency parameter may be provided defining the extent to which audio from outside the second volume 62 (or, optionally, the first volume 52) in the second three-dimensional space 50 can be heard within the first volume and/or the second volume in the second three-dimensional space. Such a transparency parameter may be provided to limit (either totally or partially) the passage of ambient audio of the second three-dimensional space into the first volume 52 and/or the second volume 62. Alternatively, or in addition, such a transparency parameter may be provided to limit (either totally or partially) the passage of sound object data into the first volume 52 and/or the second volume 62.

It should be noted that whilst the second volume 62 is shown in Figure 5 as being larger than the first volume 52, the principles described herein apply if the first and second volumes have the same size, or even if the second volume 62 is smaller than the first volume 52 - all such configurations are within the scope of the embodiments described herein.

One or more of the transparency parameters described above may be user-definable or may be automatically set in response to some condition. In other embodiments, at least some of the transparency parameters may be pre-set.

The transparency parameter effect can be implemented in audio rendering by, for example, volume control and/or digital filtering. For example, lowering the gain applied to an audio object volume will make the object quieter as if coming through a wall; the lower the gain the lower the volume and thus a lesser transparency. For example, there may be a constant gain factor which is applied to the sound object or the ambient sound to reduce the gain, depending on the amount of transparency. Alternatively or in addition, lowpass filtering may be used to simulate the effect of an acoustically partly transparent material.

Figure 6 is a flow chart, indicated generally by the reference numeral 70, showing an algorithm in accordance with an exemplary embodiment.

The algorithm 70 starts at operation 71, where a first volume is selected in a first three-dimensional space. An example of such an arrangement is described above with reference to Figure 3, in which the first volume 44 is selected within the first three-dimensional space 40.

At operation 73, elements within the first volume are copied. Those elements may include at least some of: sound object data, ambient audio and visual data.

At operation 75, elements selected by the operation 73 are pasted within a second volume. An example of such an arrangement is described above with reference to Figure 4, in which the first volume 52 is pasted within the second three-dimensional space 50.

At operation 77, audio parameters within the second three-dimensional space 50 are defined.

The audio parameters defined in operation 77 may take many forms, some of which may be user-definable and some of which may be pre-configured. Such audio parameters may include at least some of the various volumes and transparency parameters described above.

The ambient audio of the first audio data that is copied into the second three-dimensional space 50 may include only the ambient audio of the first three-dimensional space. Alternatively, the copied ambient audio may include both the ambient audio for the first three-dimensional space and audio data for sound objects outside the first volume 44 of the first three-dimensional space. Thus, the audio data copied into the second three-dimensional space may have two parts:
- audio data for sound objects within the first volume 44; and
- ambient data comprising both ambient audio for the first three-dimensional space and audio data for sound objects outside the first volume 44.

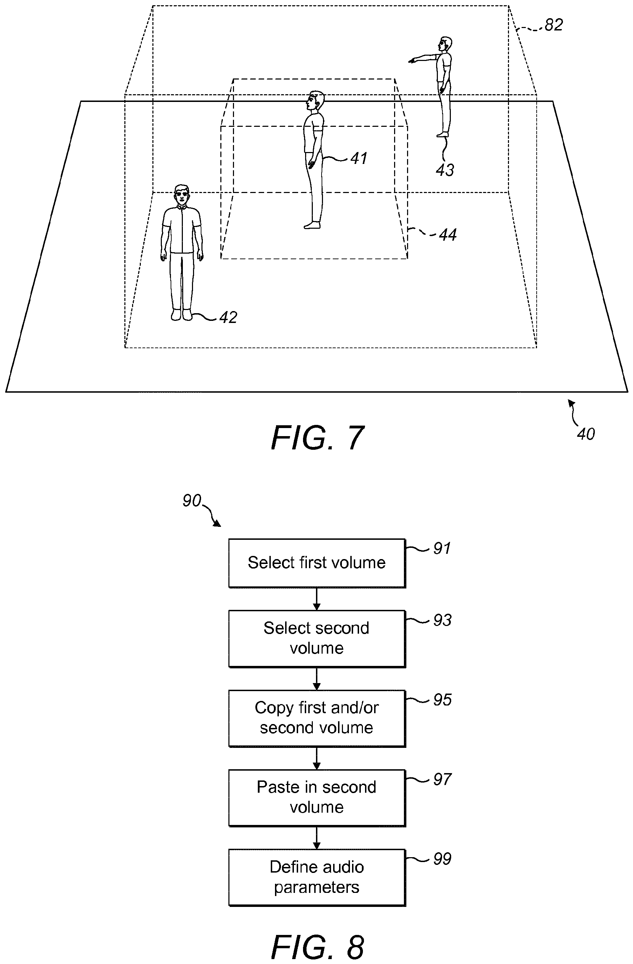

Figure 7 is a schematic view of the first three-dimensional space 40, in accordance with an example embodiment. The space 40 includes the first user 41, the second user 42 and the third user 43 described above, and also includes the first three-dimensional volume 44 described above. The space 40 shown in Figure 7 also includes a second volume 82 that is larger than, and includes, the first volume 44. As described in detail below, parameters of the first and second volumes 44 and 82 can be used to define how audio data is handled in the second three-dimensional space in response to the inclusion of audio data within the first volume 52 of the second three-dimensional space.

As described above, the sound object data of the first audio data within the first three-dimensional space includes audio data from objects within the first volume 44. In some embodiments, the sound object data of the first audio data also includes audio data from objects outside the first volume 44 and inside the second volume 82 within the first three-dimensional space 40 (such as the second user 42).

As described above, the ambient audio of the first audio data may include ambient audio for the first three-dimensional space and audio data for sound objects outside the first volume 44 of the first three-dimensional space 40. In alternative embodiments, the ambient audio for the first audio data may include ambient audio for the first three-dimensional space and audio data for sound objects outside the second volume of the first three-dimensional space.

Separating ambient audio and audio data for sound objects may be achieved, for example, by recording audio data for sound objects using dedicated microphones for the sound objects and using one or more general microphones to capture ambient data. Other solutions are possible. For example, audio data for sound objects may be recorded using dedicated microphones in a real scene, with the ambient audio being generic ambient audio data (i.e. not recorded in the relevant scene). In yet a further variant, multiple microphones may be used to record ambient audio, with an average output of the microphones being used to generate the ambient audio (thereby lessening the potential impact of a sound object on the ambient audio data).

Figure 8 is a flow chart showing an algorithm, indicated generally by the reference numeral 90, in accordance with an exemplary embodiment.

The algorithm 90 starts at operation 91, where a first volume is selected in a first three-dimensional space. An example of such an arrangement is described above with reference to Figure 7, in which the first volume 44 is selected within the first three-dimensional space 40.

At operation 93, a second volume is selected in the first three-dimensional space. An example of such an arrangement is described above with reference to Figure 7, in which the second volume 82 is selected within the first three-dimensional space 40. (Note that, is some embodiments, the second volume is defined (e.g. automatically), rather than selected.)

At operation 95, elements within the first volume (and optionally the second volume) are copied. Those elements may include at least some of: sound object data, ambient audio and visual data.

At operation 97, elements selected by the operation 95 are pasted within a second volume. An example of such an arrangement is described above with reference to Figure 4, in which the first volume 52 is pasted within the second three-dimensional space 50.

At operation 99, audio parameters within the second three-dimensional space 50 are defined. Such audio parameters may include at least some of the various volumes and transparency parameters described above.

As described above, visual data may be copied from a defined volume of the first three-dimensional space 40. This is not essential. For example, no visual data may be copied. Alternatively, visual data may be copied for a two-dimensional plane (rather than a three-dimensional volume).

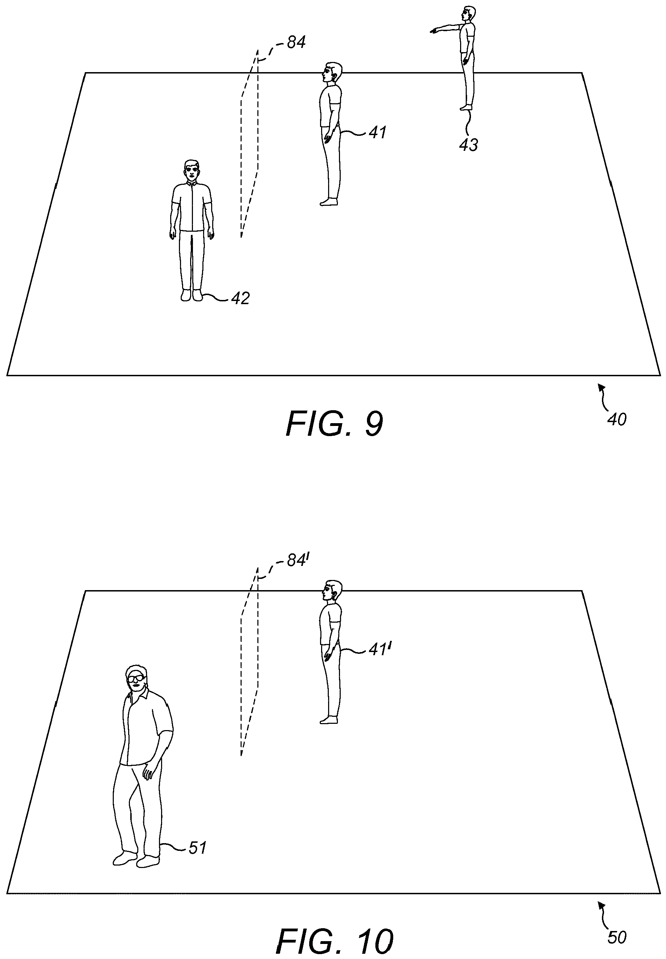

Figure 9 is a schematic view of the first three-dimensional space 40, in accordance with an example embodiment. The space 40 includes the first user 41, the second user 42 and the third user 43 described above. The space 40 shown in Figure 9 also includes a two-dimensional plane 84 that may include visual objects to be copied into the second three-dimensional volume 50.

Figure 10 is a schematic view of the second three-dimensional space 50, in accordance with an example embodiment. The second three-dimensional space 50 includes the fourth user 51 and the copy of the first user 41' described above. The space 50 shown in Figure 10 also includes a two-dimensional plane 84' that is a copy of the plane 84 described above. Thus, in some embodiments, one or more visual objects with the two-dimensional plane 84 of the first three-dimensional space 40 may be copied into the second three-dimensional space 50.

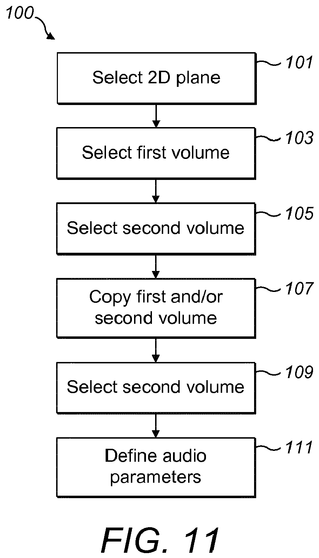

Figure 11 is a flow chart showing an algorithm, indicated generally by the reference numeral 100, in accordance with an exemplary embodiment.

The algorithm 100 starts at operation 101, where a two-dimensional plane is selected in a first three-dimensional space. An example of such an arrangement is described above with reference to Figure 9, in which the first two-dimensional plane 84 is selected within the first three-dimensional space 40. As described further below, the two-dimensional plane 84 defines visual data that is to be copied.

At operation 103, a first volume is selected in a first three-dimensional space. An example of such an arrangement is the selection of the first volume 44 within the first three-dimensional space 40 as described in the operation 91 of the algorithm 90.

At operation 105, a second volume is selected in the first three-dimensional space. An example of such an arrangement is the selection of the second volume 82 within the first three-dimensional space 40 as described in the operation 93 of the algorithm 90. (Note that operation 105 may be omitted in some embodiments.)

At operation 107, elements within the first volume (and optionally the second volume) are copied. Those elements may include the visual data within the two-dimensional plane 84 and audio data with the first volume 44 and/or the second volume 82.

At operation 109, elements selected by the operation 107 are pasted within a second volume. An example of such an arrangement is described above with reference to Figure 4, in which the first volume 52 is pasted within the second three-dimensional space 50.

At operation 111, audio parameters within the second three-dimensional space 50 are defined.

As described above, embodiments described herein typically include sound objects data and ambient data. Sound object data may be captured using microphones specifically provided for sound sources. Ambient audio may be generated from one or more microphones used to generate a residual ambience of the scene. The residual ambience may contain all sounds not captured by the microphones specifically provided for sounds sources. The sound object data may be directional, whilst the ambient audio may not be directional. However, in some embodiments, the ambient audio may include both directional and non-directional components.

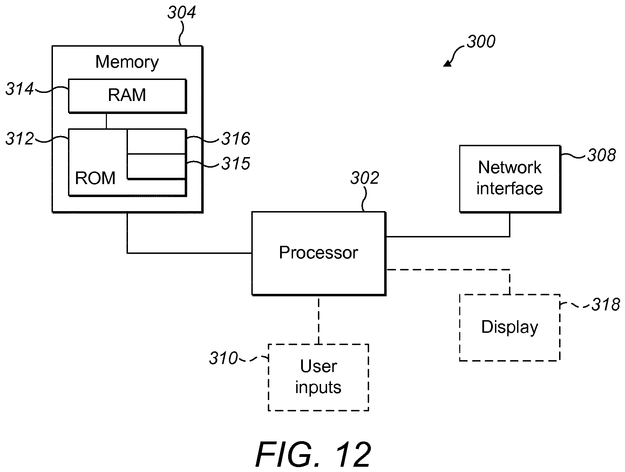

For completeness, Figure 12 is a schematic diagram of components of one or more of the modules described previously (e.g. implementing some or all of the operations of the algorithms 70, 90 and 100 described above), which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network interfaces 308 for connection to a network, e.g. a modem which may be wired or wireless.

The processor 302 is connected to each of the other components in order to control operation thereof.

The memory 304 may comprise a non-volatile memory, such as a hard disk drive (HDD) or a solid state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 70, 90 and 100 described above.

The processor 302 may take any suitable form. For instance, it may be a microcontroller, plural microcontrollers, a processor, or plural processors.

The processing system 300 may be a standalone computer, a server, a console, or a network thereof.

In some embodiments, the processing system 300 may also be associated with external software applications. These may be applications stored on a remote server device and may run partly or exclusively on the remote server device. These applications may be termed cloud-hosted applications. The processing system 300 may be in communication with the remote server device in order to utilize the software application stored there.

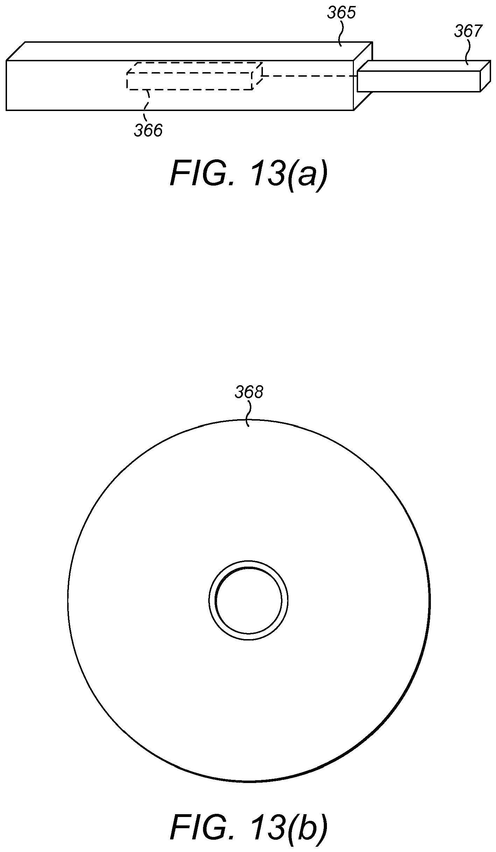

Figures 13a and 13b show tangible media, respectively a removable memory unit 365 and a compact disc (CD) 368, storing computer-readable code which when run by a computer may perform methods according to embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices and other devices. References to computer program, instructions, code etc. should be understood to express software for a programmable processor firmware such as the programmable content of a hardware device as instructions for a processor or configured or configuration settings for a fixed function device, gate array, programmable logic device, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 6, 8 and 11 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. A method comprising:
selecting a first three-dimensional volume in a first three-dimensional space, wherein the first volume includes first audio data;
copying the first three-dimensional volume in the first three-dimensional space, including the first audio data, into a first three-dimensional volume of a second three-dimensional space; and
determining or selecting a second three-dimensional volume in the second three-dimensional space,
wherein:
the first audio data comprises sound object data and ambient audio;
the sound object data of the first audio data includes audio data from one or more first sound objects within the first three-dimensional volume of the first three-dimensional space; and
the ambient audio of the first audio data is at least partially prevented from being heard outside the second three-dimensional volume in the second three-dimensional space.

2. A method as claimed in claim 1, further comprising determining or selecting a second three-dimensional volume within the first three-dimensional space, wherein the sound object data of the first audio data further comprises audio data from one or more sound objects outside the first three-dimensional volume and inside the second three-dimensional volume of the first three-dimensional space.

3. A method as claimed in claim 1, wherein the ambient audio of the first audio data comprises ambient audio for the first three-dimensional space and audio data for sound objects outside the first three-dimensional volume of the first three-dimensional space.

4. A method as claimed in claim 2, wherein the ambient audio of the first audio data comprises ambient audio for the first three-dimensional space and audio data for sound objects outside the second three-dimensional volume of the first three-dimensional space.

5. A method as claimed in any one of the preceding claims, further comprising a first transparency parameter defining the extent to which the ambient audio of the first audio data can be heard outside the second three-dimensional volume in the second three-dimensional space.

6. A method as claimed in any one of the preceding claims, further comprising a second transparency parameter defining the extent to which the audio data from the one or more first sound objects of the first audio data can be heard outside the second three-dimensional volume in the second three-dimensional space.

7. A method as claimed in any one of the preceding claims, further comprising a third transparency parameter defining the extent to which audio from outside the second three-dimensional volume in the second three-dimensional space can be heard within the first and/or second three-dimensional volume in the second three-dimensional space.

8. A method as claimed in any one of the preceding claims, wherein the first and/or second three-dimensional space is/are virtual reality models.

9. A method as claimed in any one of the preceding claims, wherein at least some of said three-dimensional volumes are selected using user input or user gestures.

10. Apparatus comprising:
means for selecting a first three-dimensional volume in a first three-dimensional space, wherein the first three-dimensional volume includes first audio data;
means for copying the first three-dimensional volume in the first three-dimensional space, including the first audio data, into a first three-dimensional volume of a second three-dimensional space; and
means for determining or selecting a second three-dimensional volume in the second three-dimensional space,
wherein:
the first audio data comprises sound object data and ambient audio;
the sound object data of the first audio data includes audio data from one or more first sound objects within the first three-dimensional volume of the first three-dimensional space; and
the ambient audio of the first audio data is at least partially prevented from being heard outside the second three-dimensional volume in the second three-dimensional space.

11. An apparatus as claimed in claim 10, further comprising means for determining or selecting a second three-dimensional volume within the first three-dimensional space, wherein the sound object data of the first audio data further comprises audio data from one or more sound objects outside the first three-dimensional volume and inside the second three-dimensional volume of the first three-dimensional space.

12. An apparatus as claimed in claim 10 or claim 11, further comprising a first transparency parameter defining the extent to which the ambient audio of the first audio data can be heard outside the second three-dimensional volume in the second three-dimensional space.

13. An apparatus as claimed in any one of claims 10 to 12, further comprising a second transparency parameter defining the extent to which the audio data from the one or more first sound objects of the first audio data can be heard outside the second three-dimensional volume in the second three-dimensional space.

14. An apparatus as claimed in any one of claims 10 to 13, further comprising means for defining a two-dimensional plane in the first three-dimensional space, the two-dimensional plane including one or more visual objects, the method further comprising copying the one or more visual objects in the two-dimensional plane of the first three-dimensional space into the second three-dimensional space.

15. A computer readable medium having computer-readable code stored thereon, the computer readable code, when executed by at least one processor causes performance of:
selecting a first three-dimensional volume in a first three-dimensional space, wherein the first volume includes first audio data;
copying the first three-dimensional volume in the first three-dimensional space, including the first audio data, into a first three-dimensional volume of a second three-dimensional space; and
determining or selecting a second three-dimensional volume in the second three-dimensional space,
wherein:
the first audio data comprises sound object data and ambient audio;
the sound object data of the first audio data includes audio data from one or more first sound objects within the first three-dimensional volume of the first three-dimensional space; and
the ambient audio of the first audio data is at least partially prevented from being heard outside the second three-dimensional volume in the second three-dimensional space.
